# EUROPEAN PATENT APPLICATION

(11) **EP 4 372 558 A1**
(43) Date of publication of application: **22.05.2024**
(21) Application number: 23198697.7
(22) Date of filing: 21.09.2023
(51) Int. Cl.: G06F 9/48, G06F 9/50

(54) **TASK SCHEDULING PROCESSING METHOD, APPARATUS, ELECTRONIC DEVICE, AND STORAGE MEDIUM**

(30) Priority: 17.11.2022 CN 202211461683
(71) Applicant: Nanjing Horizon Robotics Integrated Circuit Co., Ltd., Nanjing, Jiangsu 210046 (CN)
(72) Inventor: SUN, Zhe, Nanjing, 210046 (CN); YANG, Hangjun, Nanjing, 210046 (CN)
(74) Representative: DehnsGermany Partnerschaft von Patentanwälten

(57) **Abstract**

Disclosed are a task scheduling processing method, an electronic device, and a storage medium. The method includes: obtaining to-be-orchestrated task information and target resource information; determining a first quantity of threads based on the target resource information; determining an orchestration period based on the to-be-orchestrated task information; determining, based on the orchestration period, time slices respectively corresponding to the first quantity of threads; generating a task scheduling table based on the to-be-orchestrated task information and the time slices respectively corresponding to all the threads, the task scheduling table including threads respectively corresponding to all to-be-orchestrated tasks and corresponding execution time information in the time slice for the thread; and scheduling all the to-be-orchestrated tasks based on the task scheduling table. Accordingly, the task is executed in an expected time without being affected by another task, thereby effectively improving task scheduling efficiency and real-time performance during scheduling.

## Description

### RELATED APPLICATION INFORMATION

This application claims priority to Chinese patent application Ser. No. 202211461683.1 filed on November 17, 2022, entitled "TASK SCHEDULING PROCESSING METHOD AND APPARATUS, ELECTRONIC DEVICE, AND STORAGE MEDIUM", all of which is incorporated herein by reference in their entirety.

### FIELD OF THE INVENTION

This disclosure relates to computer technologies, and in particular, to a task scheduling processing method and apparatus, an electronic device, and a storage medium.

### BACKGROUND OF THE INVENTION

In the field of autonomous driving, applications for autonomous driving become increasingly complex, with many periodic tasks in the applications. To ensure safety and reliability of autonomous driving, there is an increasing demand for real-time and stable task execution. In related technologies, a periodic task is usually executed based on a dynamic scheduling strategy. However, dynamic scheduling can easily lead to low task execution efficiency and poor real-time performance.

### SUMMARY OF THE INVENTION

To resolve the foregoing technical problem of low task execution efficiency and poor real-time performance, this disclosure is proposed. Embodiments of this disclosure provide a task scheduling processing method and apparatus, an electronic device, and a storage medium.

According to an aspect of an embodiment of this disclosure, a task scheduling processing method is provided, including: obtaining to-be-orchestrated task information and target resource information, wherein the to-be-orchestrated task information includes periodic task description information corresponding to at least one to-be-orchestrated task, and the target resource information includes available processing resource information; determining a first quantity of threads based on the target resource information; determining an orchestration period based on the to-be-orchestrated task information; determining, based on the orchestration period, time slices respectively corresponding to the first quantity of threads; generating a task scheduling table based on the to-be-orchestrated task information and the time slices respectively corresponding to all the threads, wherein the task scheduling table includes threads respectively corresponding to all to-be-orchestrated tasks and corresponding execution time information in the time slice for the thread; and scheduling all the to-be-orchestrated tasks based on the task scheduling table.

According to another aspect of an embodiment of this disclosure, a task scheduling processing apparatus is provided, including: a first obtaining module, configured to obtain to-be-orchestrated task information and target resource information, wherein the to-be-orchestrated task information includes periodic task description information corresponding to at least one to-be-orchestrated task, and the target resource information includes available processing resource information; a first processing module, configured to determine a first quantity of threads based on the target resource information; a second processing module, configured to determine an orchestration period based on the to-be-orchestrated task information; a third processing module, configured to determine, based on the orchestration period, time slices respectively corresponding to the first quantity of threads; a fourth processing module, configured to generate a task scheduling table based on the to-be-orchestrated task information and the time slices respectively corresponding to all the threads, wherein the task scheduling table includes threads respectively corresponding to all to-be-orchestrated tasks and corresponding execution time information in the time slice for the thread; and a scheduling module, configured to schedule all the to-be-orchestrated tasks based on the task scheduling table.

According to still another aspect of embodiments of this disclosure, a non-transitory computer readable storage medium is provided, wherein the storage medium stores a computer program, and the computer program is used for implementing the task scheduling processing method described in any one of the foregoing embodiments of this disclosure.

According to yet another aspect of an embodiment of this disclosure, an electronic device is provided, wherein the electronic device includes: a processor; and a memory configured to store processor-executable instructions, wherein the processor is configured to read the executable instructions from the memory and execute the instructions to implement the task scheduling processing method described in any one of the foregoing embodiments of this disclosure.

Based on the task scheduling processing method and apparatus, the electronic device, and the storage medium provided in the foregoing embodiments of this disclosure, the orchestration period is predetermined based on the to-be-orchestrated task information; the quantity of the threads is determined based on the target resource information, so as to determine the time slices of the threads based on the orchestration period; and the to-be-orchestrated task is orchestrated into the time slice for each thread, to generate the task scheduling table. During task scheduling, tasks can be directly scheduled based on the task scheduling table. In this way, static orchestration of a periodic task is implemented, and a thread and a time point for task execution are predetermined to ensure that the task is executed in an expected time without being affected by another task, thereby effectively improving task scheduling efficiency and real-time performance during scheduling.

The technical solutions of this disclosure are further described below in detail with reference to the accompanying drawings and the embodiments.

### BRIEF DESCRIPTION OF THE DRAWINGS

FIG. 1 is an exemplary application scenario of a task scheduling processing method according to this disclosure;
FIG. 2 is a schematic flowchart of a task scheduling processing method according to an exemplary embodiment of this disclosure;
FIG. 3 is a schematic flowchart of a task scheduling processing method according to another exemplary embodiment of this disclosure;
FIG. 4 is a schematic flowchart of step 2051 according to an exemplary embodiment of this disclosure;
FIG. 5 is a schematic flowchart of step 20511 according to an exemplary embodiment of this disclosure;
FIG. 6 is a schematic flowchart of step 2051 according to another exemplary embodiment of this disclosure;
FIG. 7 is a schematic diagram of periodic task orchestration according to an exemplary embodiment of this disclosure;
FIG. 8 is a schematic flowchart of a worst case backtracking according to an exemplary embodiment of this disclosure;
FIG. 9 is a schematic structural diagram of a task scheduling processing apparatus according to an exemplary embodiment of this disclosure;
FIG. 10 is a schematic structural diagram of a task scheduling processing apparatus according to another exemplary embodiment of this disclosure; and
FIG. 11 is a schematic structural diagram of an application embodiment of an electronic device according to this disclosure.

### DETAILED DESCRIPTION OF THE EMBODIMENTS

Exemplary embodiments of this disclosure are described below in detail with reference to the accompanying drawings. Obviously, the described embodiments are merely a part, rather than all of embodiments of this disclosure. It should be understood that this disclosure is not limited by the exemplary embodiments described herein.

It should be noted that unless otherwise specified, the scope of this disclosure is not limited by relative arrangement of components and steps, numeric expressions, and numerical values described in these embodiments.

### Overview of this disclosure

In a process of implementing this disclosure, the inventor finds that in the field of autonomous driving, applications for autonomous driving become increasingly complex, with many periodic tasks in the applications. To ensure safety and reliability of autonomous driving, there is an increasing demand for real-time and stable task execution. In related technologies, a periodic task is usually executed based on a dynamic scheduling strategy. For example, a task queue is maintained in a real-time manner by using a scheduler. An order of a task in the task queue is determined when the task needs to be executed. However, because the task needs to be queued in the task queue for execution, dynamic scheduling can easily lead to low task execution efficiency and poor real-time performance.

### Exemplary overview

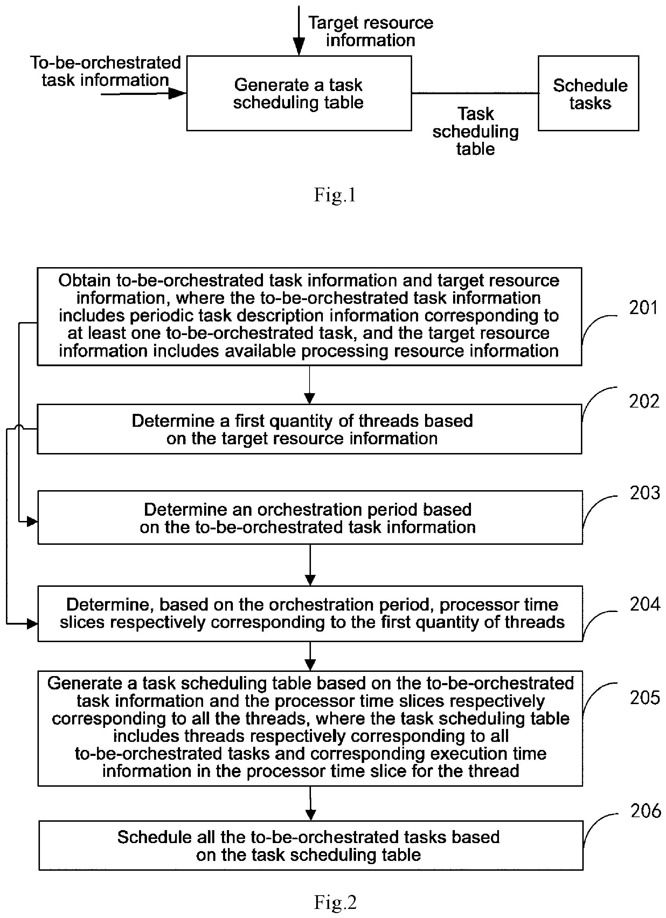

FIG. 1 is an exemplary application scenario of a task scheduling processing method according to this disclosure.

In an autonomous driving scenario, for periodic tasks that meet a preset condition (there is no direct coupling between the periodic tasks, and an execution sequence and a period can be flexibly set) for various applications, such as tasks of periodically obtaining original data of a sensor on a vehicle, determining a speed, an acceleration, and other states of the vehicle based on the original data, and periodically detecting a health state of each sensor or another device, a task scheduling table can be pre-determined by using the task scheduling processing method according to this disclosure before task scheduling is performed by a scheduler, so that scheduling is directly performed based on the task scheduling table during the scheduling. In this way, it is ensured that each periodic task can be scheduled accurately in a real-time manner based on a preset period of the periodic task, thereby effectively resolving a problem of low execution efficiency and poor real-time performance caused by existing dynamic scheduling. Specifically, to-be-orchestrated task information and target resource information can be obtained. The to-be-orchestrated task information includes periodic task description information corresponding to at least one to-be-orchestrated task, such as worst-case execution time (WCET for short, which refers to maximum execution time of software under a possible operating condition) of a single task, a triggering period, and other information. The target resource information includes available processing resource information of the to-be-orchestrated task, such as a quantity of processors (CPU (central processing unit), BPU (brain processing unit), GPU (graphics processing unit), and the like), a processor identifier, and other information. A first quantity of threads can be determined based on the target resource information. An orchestration period can be determined based on the to-be-orchestrated task information. The orchestration period represents a time slice that needs to be allocated for each thread. Time slices respectively corresponding to all threads are determined based on the orchestration period, and further the task scheduling table is generated based on the to-be-orchestrated task information and the time slices respectively corresponding to all the threads. The task scheduling table includes threads respectively corresponding to all to-be-orchestrated tasks and corresponding execution time information in the time slice for the thread. The execution time information can include an offset of a time point for triggering the task for at least one time relative to a starting time point of the time slice. For example, in an orchestration period, if a to-be-orchestrated task can be executed for four times, the execution time information can include 4 offsets relative to the starting time point, or can only include an offset of a time point at which execution is triggered for a first time. During scheduling, triggering is sequentially performed at following corresponding time points based on a task period. This can be specifically set according to actual requirements. After the task scheduling table is determined, each to-be-orchestrated task can be scheduled based on the task scheduling table during task scheduling. In this way, compared to dynamic scheduling, real-time performance of the task scheduling can be effectively improved without maintaining a task queue in a real-time manner, thereby improving task execution efficiency.

The task scheduling processing method disclosed in this disclosure is not limited to applications in the scenario or field of autonomous driving, but can be applicable to any scenario or field with periodic tasks according to actual requirements. Specific scenarios and fields are not limited.

### Exemplary method

FIG. 2 is a schematic flowchart of a task scheduling processing method according to an exemplary embodiment of this disclosure. This embodiment can be applicable to an electronic device, such as a server or a terminal. Specifically, this embodiment is applicable to, for example, an in-car computing platform. As shown in FIG. 2, the method includes the following steps.

Step 201, obtain to-be-orchestrated task information and target resource information, where the to-be-orchestrated task information includes periodic task description information corresponding to at least one to-be-orchestrated task, and the target resource information includes available processing resource information.

The periodic task description information includes a triggering period of the to-be-orchestrated task, worst-case execution time, and other related information. This can be specifically set according to actual requirements. The to-be-orchestrated task is a periodic task meeting a preset condition. The preset condition is that there is no direct coupling between periodic tasks, and an execution sequence and the triggering period of the periodic tasks can be flexibly set. This can be specifically set according to actual requirements. The processing resource information may include, for example, a quantity of processors, a processor identifier, and other relevant information.

Step 202, determine a first quantity of threads based on the target resource information.

The first quantity is determined by a quantity of processing resource information included in the target resource information. For example, each processor corresponds to one thread, and N threads can be determined if there are N processors.

Step 203, determine an orchestration period based on the to-be-orchestrated task information.

The orchestration period can be determined based on a preset rule, and the preset rule can be set according to actual requirements.

For example, since to-be-orchestrated tasks are all periodic tasks with corresponding task periods (which are also referred to as triggering periods), in order to effectively utilize a resource, the orchestration period can be determined based on a least common multiple for the task periods of all the to-be-orchestrated tasks. For example, the orchestration period can be the same as the least common multiple, or can be an integer multiple of the least common multiple. This can be specifically set according to actual requirements.

Steps 202 and 203 are not in a sequential order.

Step 204, determine, based on the orchestration period, time slices respectively corresponding to the first quantity of threads.

The time slice corresponding to the thread represents a processor time slice that needs to be allocated for the thread when the thread is created by the processor, and is configured to execute each to-be-orchestrated task. Based on the orchestration period, it can be determined that the time slice respectively corresponding to each thread can be the same as the orchestration period, or can be a preset multiple of the orchestration period. This can be specifically set according to actual requirements. For example, the orchestration period determined above is the least common multiple for the task periods of all the to-be-orchestrated tasks, and the time slice for the thread is twice of the orchestration period.

Step 205, generate a task scheduling table based on the to-be-orchestrated task information and the time slices respectively corresponding to all the threads, where the task scheduling table includes threads respectively corresponding to all to-be-orchestrated tasks and corresponding execution time information in the time slice for the thread.

Based on a preset orchestration rule, execution time of each to-be-orchestrated task can be made corresponding to the time slice for each thread to generate the task scheduling table. The preset orchestration rule can be set according to actual requirements. For example, a preset orchestration algorithm, such as a backtracking algorithm, is used. This is not specifically limited.

Step 206, schedule all the to-be-orchestrated tasks based on the task scheduling table.

The task scheduling table is a static task scheduling table determined before task scheduling. Dynamic maintenance is not required during the task scheduling, provided that a corresponding task is scheduled based on the execution time information of each to-be-orchestrated task in the task scheduling table.

According to the task scheduling processing method provided in this embodiment, the orchestration period is predetermined based on the to-be-orchestrated task information; the quantity of the threads is determined based on the target resource information, so as to determine the time slices of all the threads based on the orchestration period; and the to-be-orchestrated task is orchestrated into the time slice for each thread, to generate the task scheduling table. During the task scheduling, tasks can be directly scheduled based on the task scheduling table. In this way, static orchestration of the periodic task is implemented, and a thread and a time point for task execution are predetermined to ensure that the task is executed in an expected time without being affected by another task, thereby effectively improving task scheduling efficiency and real-time performance during scheduling.

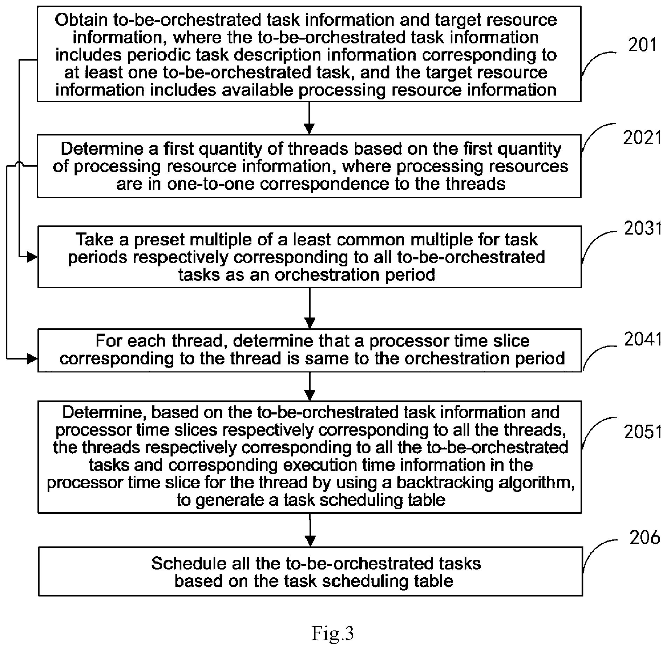

FIG. 3 is a schematic flowchart of a task scheduling processing method according to another exemplary embodiment of this disclosure.

In an optional example, step 205 can specifically include the following steps.

Step 2051, determine, based on the to-be-orchestrated task information and the time slices respectively corresponding to all the threads, the threads respectively corresponding to all the to-be-orchestrated tasks and the corresponding execution time information in the time slice for the thread by using a backtracking algorithm, to generate the task scheduling table.

The backtracking algorithm is an optimization search method for searching forward according to an optimization condition to achieve a goal. When a certain step is reached, if it is found that an original selection is not optimal or the goal cannot be achieved, a step is taken back to select again. In this disclosure, the to-be-orchestrated task suitable for orchestration in the time slice for the thread is searched based on the backtracking algorithm according to a certain optimization condition, to orchestrate the to-be-orchestrated task. After a certain to-be-orchestrated task has been orchestrated, if it is found that the remaining to-be-orchestrated tasks cannot be orchestrated, a step is taken back to return to a state before the to-be-orchestrated task is orchestrated, so as to select another to-be-orchestrated task for orchestration. Otherwise, the remaining to-be-orchestrated tasks are orchestrated according to the optimization condition until all the to-be-orchestrated tasks are orchestrated. In this way, the task scheduling table is obtained.

According to this disclosure, the task scheduling is performed by using the backtracking algorithm to orchestrate all the to-be-orchestrated tasks in an optimal manner as possible, thereby further improving the task scheduling efficiency.

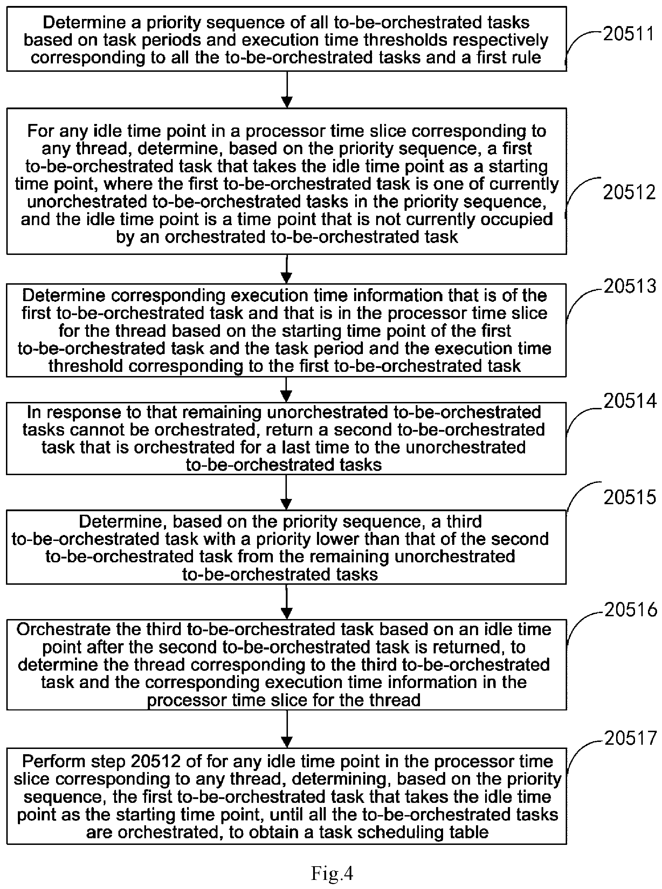

FIG. 4 is a schematic flowchart of step 2051 according to an exemplary embodiment of this disclosure.

In an optional example, the periodic task description information includes a task period and an execution time threshold of the to-be-orchestrated task. Step 2051 of determining, based on the to-be-orchestrated task information and the time slices respectively corresponding to all the threads, the threads respectively corresponding to all the to-be-orchestrated tasks and the corresponding execution time information in the time slice for the thread by using the backtracking algorithm, to generate the task scheduling table includes:

Step 20511, determine a priority sequence of all the to-be-orchestrated tasks based on task periods and execution time thresholds respectively corresponding to all the to-be-orchestrated tasks and a first rule.

The task period of the to-be-orchestrated task can be set according to actual requirements. The execution time threshold can be determined based on single execution time of the to-be-orchestrated task; for example, the execution time threshold can be worst-case execution time of the to-be-orchestrated task. The first rule can be set according to actual requirements; for example, the priority sequence can be determined based on requirements for priority of all the to-be-orchestrated tasks; for another example, to reduce a return rate during search, the priority sequence is determined based on a rule of giving priority to the to-be-orchestrated task with a small task period, and for to-be-orchestrated tasks with a same task period, giving priority to the to-be-orchestrated task with a larger execution time threshold. This is not specifically limited.

For example, the to-be-orchestrated tasks are numbered in a sequence of priorities, and a smaller number indicates a higher priority, and then the priority sequence of the to-be-orchestrated tasks is determined based on numbers in an ascending order. During orchestration, priority is given to the to-be-orchestrated task with a higher priority (a smaller number).

Step 20512, for any idle time point in the time slice corresponding to any thread, determine, based on the priority sequence, a first to-be-orchestrated task that takes the idle time point as a starting time point, where the first to-be-orchestrated task is one of currently unorchestrated to-be-orchestrated tasks in the priority sequence, and the idle time point is a time point that is not currently occupied by an orchestrated to-be-orchestrated task.

Any idle time point in the time slice for any thread can be a target idle time point determined according to a certain rule. For example, the idle time point in the time slice for each thread can be traversed based on the time slices in a chronological order, and a currently traversed idle time point is used as the target idle time point. The first to-be-orchestrated task that takes the target idle time point as the starting time point is determined based on the priority sequence. When the target idle time point is taken as the starting time point of the first to-be-orchestrated task, the target idle time point and some subsequent time points (which are determined based the execution time threshold of the first to-be-orchestrated task) are occupied by the first to-be-orchestrated task, and are no longer idle time points.

Step 20513, determine the corresponding execution time information that is of the first to-be-orchestrated task and that is in the time slice for the thread based on the starting time point of the first to-be-orchestrated task and the task period and the execution time threshold corresponding to the first to-be-orchestrated task.

After the starting time point of the first to-be-orchestrated task is determined, corresponding execution time information, in the time slice, for periodic execution of the first to-be-orchestrated task needs to be determined. The execution time information can include a starting time point and required duration of each execution triggering, or can also include a starting time point, a task period, and an execution time threshold of first execution triggering. This can be specifically set according to actual requirements, provided that a periodic execution triggering time point of the to-be-orchestrated task can be determined during the scheduling.

Step 20514, in response to that remaining unorchestrated to-be-orchestrated tasks cannot be orchestrated, return a second to-be-orchestrated task that is orchestrated for a last time to the unorchestrated to-be-orchestrated tasks.

The remaining unorchestrated to-be-orchestrated tasks refer to the to-be-orchestrated tasks except those already orchestrated in all the to-be-orchestrated tasks. A certain determining rule can be set to determine that the remaining unorchestrated to-be-orchestrated tasks cannot be orchestrated. For example, after the traversal for the idle time point ends, there are still unorchestrated to-be-orchestrated tasks. The specific determining rule can be set according to actual requirements. The second to-be-orchestrated task that is orchestrated for the last time refers to a to-be-orchestrated task that is orchestrated last prior to a current moment. Returning the second to-be-orchestrated task to the unorchestrated to-be-orchestrated tasks means that a time point in a time slice occupied by the second to-be-orchestrated task is released, so that this time point becomes an idle time point again, and the second to-be-orchestrated task is taken as an unorchestrated to-be-orchestrated task, so that the orchestration process returns to a state before the second to-be-orchestrated task is orchestrated.

In practical application, an orchestrated task set and an unorchestrated task set can be maintained in a real-time manner. An orchestration state of each to-be-orchestrated task can be maintained in a real-time manner through transfer of a to-be-orchestrated task between the orchestrated task set and the unorchestrated task set. Alternatively, the orchestration state of each to-be-orchestrated task can be maintained in a real-time manner by maintaining orchestration-state information (such as an orchestration-state mark) of each to-be-orchestrated task in a real-time manner. A specific manner can be set according to actual requirements, and this is not limited in this disclosure. A thread occupied by each orchestrated to-be-orchestrated task and occupied time in the time slice for the thread can further be recorded in a real-time manner, so as to determine the idle time point or determine whether there is a conflict in occupied time during subsequent orchestration, thereby determining whether a subsequent to-be-orchestrated task can be orchestrated.

Step 20515, determine, based on the priority sequence, a third to-be-orchestrated task with a priority lower than that of the second to-be-orchestrated task from the remaining unorchestrated to-be-orchestrated tasks.

After the second to-be-orchestrated task is returned to the unorchestrated to-be-orchestrated tasks, another to-be-orchestrated task needs to be selected for orchestration. A selection rule is to select the third to-be-orchestrated task with a priority lower than that of the second to-be-orchestrated task from the remaining unorchestrated to-be-orchestrated tasks. For example, if a number of the second to-be-orchestrated task is 3, and the unorchestrated to-be-orchestrated tasks include to-be-orchestrated tasks with numbers of 4 and 5, a to-be-orchestrated task with a smallest number among to-be-orchestrated tasks with numbers greater than 3 (which means that a priority is lower than 3), that is, the to-be-orchestrated task with the number of 4, is selected as the third to-be-orchestrated task.

Step 20516, orchestrate the third to-be-orchestrated task based on an idle time point after the second to-be-orchestrated task is returned, to determine the thread corresponding to the third to-be-orchestrated task and the corresponding execution time information in a time slice for the thread.

An idle time point that is in idle time points after the second to-be-orchestrated task is returned and that is originally used as a starting time point of the second to-be-orchestrated task can be used as the target idle time point. The target idle time point is used as a starting time point of the third to-be-orchestrated task. If the third to-be-orchestrated task can be orchestrated, it can be determined that the thread corresponding to the third to-be-orchestrated task is a thread where the target idle time point is located. The corresponding execution time information of the third to-be-orchestrated task in the time slice for the thread includes the target idle time point (which is the starting time point of the third to-be-orchestrated task) and another time point or period occupied by the third to-be-orchestrated task.

If the third to-be-orchestrated task cannot be orchestrated, a to-be-orchestrated task with a priority lower than that of the third to-be-orchestrated task is selected from the remaining unorchestrated to-be-orchestrated tasks for orchestration. If the selected to-be-orchestrated task can be orchestrated, a normal orchestration process is returned to. To be specific, orchestration starts from step 20512 described above.

Step 20517, perform step 20512 of for any idle time point in the time slice corresponding to any thread, determining, based on the priority sequence, a first to-be-orchestrated task that takes the idle time point as the starting time point, until all the to-be-orchestrated tasks are orchestrated, to obtain the task scheduling table.

In this step, when step 20512 is performed, any determined idle time point is a target idle time point in idle time points after the third to-be-orchestrated task is orchestrated. For details of determining the specific target idle time point, reference can be made to the content described above, and details are not described herein again.

In this disclosure, by first determining the priority sequence of all the to-be-orchestrated tasks, the to-be-orchestrated tasks are orchestrated based on the priority sequence by using the backtracking algorithm, so that the to-be-orchestrated task with a higher priority is orchestrated at a more anterior position in the time slice as possible to be orchestrated preferentially.

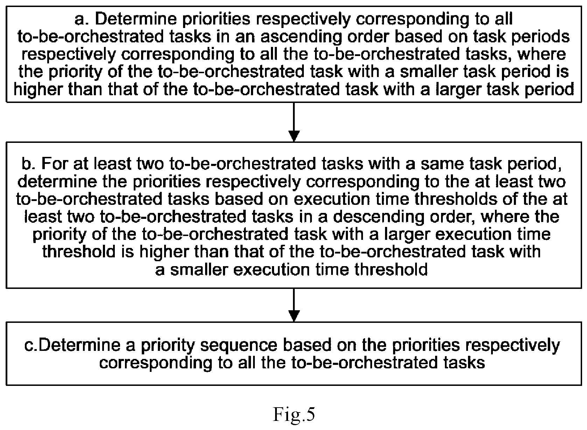

FIG. 5 is a schematic flowchart of step 20511 according to an exemplary embodiment of this disclosure.

In an optional example, step 20511 of determining the priority sequence of all the to-be-orchestrated tasks based on the task periods and the execution time thresholds respectively corresponding to all the to-be-orchestrated tasks and the first rule includes the following steps.
a, determine priorities respectively corresponding to all the to-be-orchestrated tasks in an ascending order based on the task periods respectively corresponding to all the to-be-orchestrated tasks, where the priority of the to-be-orchestrated task with a smaller task period is higher than that of the to-be-orchestrated task with a larger task period.
   For example, if a task period of a to-be-orchestrated task A is 20 milliseconds, a task period of a to-be-orchestrated task B is 50 milliseconds, and a task period of a to-be-orchestrated task C is 10 milliseconds, then the priority sequence of the priorities in a descending order is C>A>B.
b, for at least two to-be-orchestrated tasks with a same task period, determine the priorities respectively corresponding to the at least two to-be-orchestrated tasks based on the execution time thresholds of the at least two to-be-orchestrated tasks in a descending order, where the priority of the to-be-orchestrated task with a larger execution time threshold is higher than that of the to-be-orchestrated task with a smaller execution time threshold.
   For example, if a task period of a to-be-orchestrated task D is 20 milliseconds, being the same as the to-be-orchestrated task A, the execution time thresholds of A and D are compared. For example, if the execution time threshold of the to-be-orchestrated task A is 20 milliseconds and the execution time threshold of the to-be-orchestrated task D is 10 milliseconds, the priority of A is higher than that of D, and a final priority sequence is C>A>D>B.
c, determine the priority sequence based on the priorities respectively corresponding to all the to-be-orchestrated tasks.

In this disclosure, the priority sequence of all the to-be-orchestrated tasks is determined according to rules that a smaller task period indicates a higher priority, and that for to-be-orchestrated tasks with a same task period, a larger execution time threshold indicates a higher priority. In this way, in the process of orchestrating by using the backtracking algorithm, a task that requires more execution times and occupies more time points is orchestrated preferentially. As the orchestration process progresses, remaining idle time may be divided into more time segments by an orchestrated task. A remaining task that requires less execution times and occupies few time points is more likely to be orchestrated successfully. In this case, a backtracking probability can be effectively reduced and orchestration efficiency can be improved.

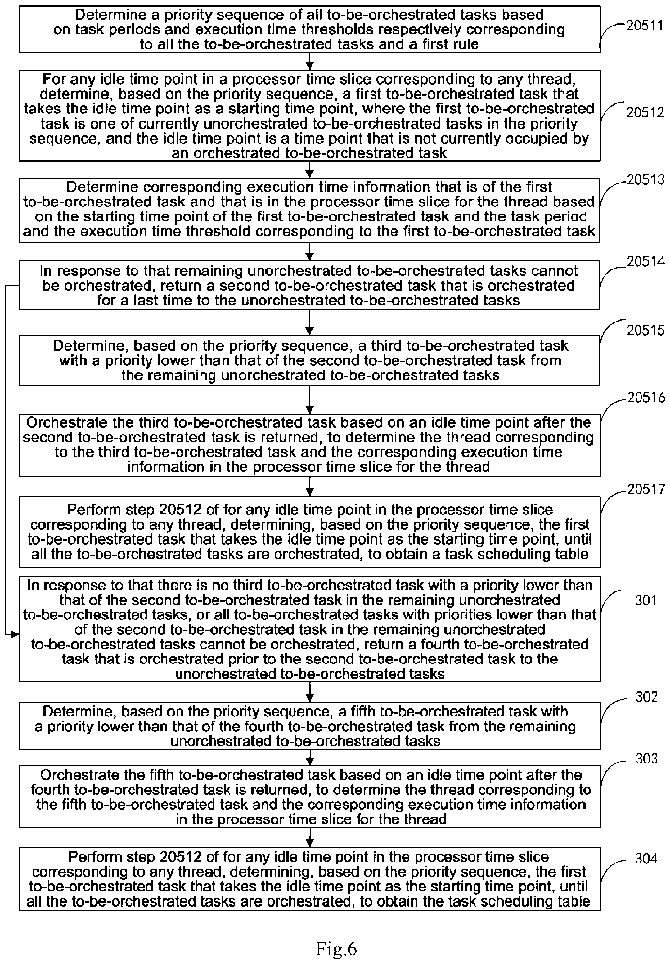

FIG. 6 is a schematic flowchart of step 2051 according to another exemplary embodiment of this disclosure.

In an optional example, after step 20514 of in response to that the remaining unorchestrated to-be-orchestrated tasks cannot be orchestrated, returning the second to-be-orchestrated task that is orchestrated for the last time to the unorchestrated to-be-orchestrated tasks, the following steps are further included.

Step 301, in response to that there is no third to-be-orchestrated task with a priority lower than that of the second to-be-orchestrated task in the remaining unorchestrated to-be-orchestrated tasks, or all to-be-orchestrated tasks with priorities lower than that of the second to-be-orchestrated task in the remaining unorchestrated to-be-orchestrated tasks cannot be orchestrated, return a fourth to-be-orchestrated task that is orchestrated prior to the second to-be-orchestrated task to the unorchestrated to-be-orchestrated tasks.

When there is no third to-be-orchestrated task with a priority lower than that of the second to-be-orchestrated task in remaining unorchestrated tasks, or all the to-be-orchestrated tasks with priorities lower than that of the second to-be-orchestrated task in the remaining unorchestrated to-be-orchestrated tasks cannot be orchestrated, it is indicated that all unorchestrated to-be-orchestrated tasks have been traversed and there are still unorchestrated to-be-orchestrated tasks. Therefore, backtracking is required again to return the fourth to-be-orchestrated task that is orchestrated prior to the second to-be-orchestrated task to the unorchestrated to-be-orchestrated tasks, and select another orchestration path.

Step 302, determine, based on the priority sequence, a fifth to-be-orchestrated task with a priority lower than that of the fourth to-be-orchestrated task from the remaining unorchestrated to-be-orchestrated tasks.

For a specific operation principle of this step, reference can be made to step 20515 described above, and details are not described herein again.

Step 303, orchestrate the fifth to-be-orchestrated task based on an idle time point after the fourth to-be-orchestrated task is returned, to determine the thread corresponding to the fifth to-be-orchestrated task and the corresponding execution time information in the time slice for the thread.

For a specific operation principle of this step, reference can be made to step 20516 described above, and details are not described herein again.

Step 304, perform step 20512 of for any idle time point in the time slice corresponding to any thread, determining, based on the priority sequence, the first to-be-orchestrated task that takes the idle time point as the starting time point, until all the to-be-orchestrated tasks are orchestrated, to obtain the task scheduling table.

For a specific operation principle of this step, reference can be made to step 20517 described above, and details are not described herein again.

In this disclosure, during the task orchestration process of using the backtracking algorithm, multi-level backtracking can be performed until normal orchestration can be performed, thereby completing orchestration of all to-be-orchestrated tasks.

In an optional example, for time slices of a plurality of threads, the idle time point of each thread can be traversed sequentially to determine whether the idle time point can be used as a starting time point of a certain to-be-orchestrated task. For each thread, all idle time points are traversed from front to back according to the time slice for the thread. Whether the idle time point can be used as the starting time point of a certain to-be-orchestrated task can be determined according to foregoing process.

In an optional example, for each time slice, a preset time unit can be used as a minimum time unit, such as 1 microsecond. This can be specifically set according to actual requirements. In this case, each minimum time unit corresponds to one time point.

In an optional example, step 203 of determining the orchestration period based on the to-be-orchestrated task information includes:

Step 2031, take a preset multiple of a least common multiple for the task periods respectively corresponding to all the to-be-orchestrated tasks as the orchestration period.

The least common multiple refers to a smallest multiple that can be shared by all task periods. The preset multiple can be set according to actual requirements. For example, the preset multiple is set to 2 or 3 times, provided that the preset multiple is an integer multiple.

In this disclosure, by setting the orchestration period to the preset multiple of the least common multiple for the task periods of all the to-be-orchestrated tasks, execution of any to-be-orchestrated task can be triggered for at least one time within the orchestration period. In this way, a case that a certain to-be-orchestrated task cannot be orchestrated within the orchestration period is avoided, thereby ensuring that the to-be-orchestrated task can be executed by each thread.

In an optional example, step 204 of determining, based on the orchestration period, the time slices respectively corresponding to the first quantity of threads includes:

Step 2041, for each thread, determine that the time slice corresponding to the thread is same to the orchestration period.

The time slice for the thread is set to be the same as duration of the orchestration period, so that the thread can execute any to-be-orchestrated task at least one time within the time slice, thereby avoiding a situation where the time slice for the thread is insufficient to execute a certain to-be-orchestrated task.

In an optional example, the target resource information includes a first quantity of available processing resource information, and step 202 of determining the first quantity of threads based on the target resource information includes:

Step 2021, determine the first quantity of threads based on the first quantity of processing resource information, where processing resources are in one-to-one correspondence to the threads.

The processing resource information includes relevant information such as a type and an identifier of the processing resource. Each processing resource can establish a thread at a certain time. A processor time slice is allocated for the thread to execute various tasks in the task scheduling table. After threads corresponding to the to-be-orchestrated tasks are determined, different threads are established by respective corresponding processing resources, and tasks orchestrated in other time slices can be completed concurrently.

According to this disclosure, the quantity of the threads can be determined based on the available processing resources, so that a plurality of threads can execute periodic tasks concurrently without affecting each other, thereby further improving task scheduling efficiency.

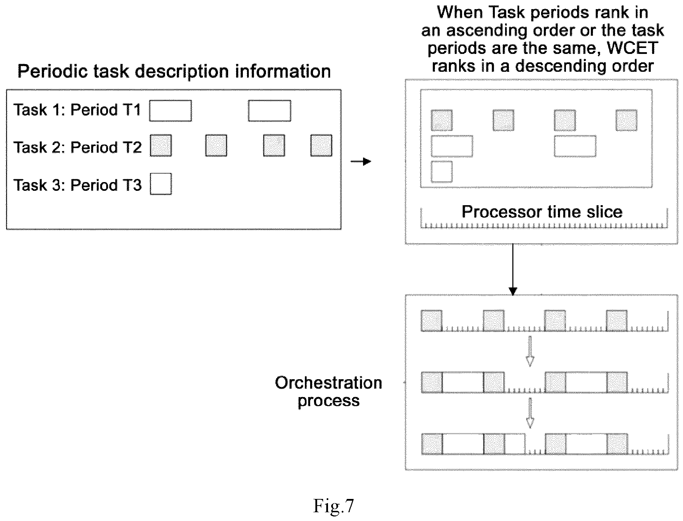

In an optional example, FIG. 7 is a schematic diagram of periodic task orchestration according to an exemplary embodiment of this disclosure. In this example, there are three to-be-orchestrated tasks, which are task 1 (a task period is period T1), task 2 (a task period is period T2), and task 3 (a task period is period T3). It is satisfied that T2<T1<T3. Ranking of worst-case execution time (WCET) for the three to-be-orchestrated tasks is: task 1>task 2=task 3. In this example, the time slice for one thread is used as an example, where the task 2 is orchestrated first, and then the task 1 is orchestrated, and the task 3 is orchestrated at last.

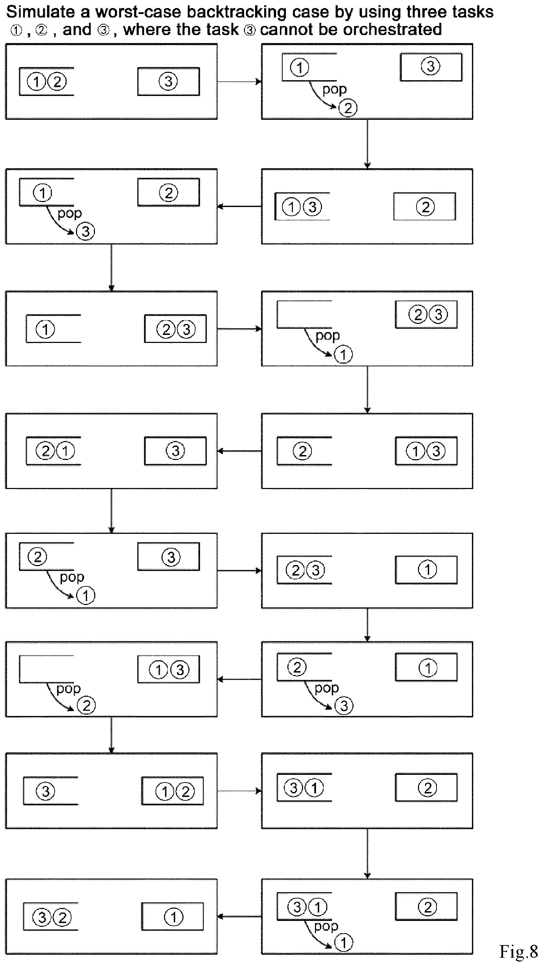

In an optional example, FIG. 8 is a schematic flowchart of a worst-case backtracking according to an exemplary embodiment of this disclosure. In this example, three tasks are orchestrated. The "pop" represents backtracking (or returning), and each large rectangular box represents a step in the orchestration process. Taking a first large rectangular box as an example, a U-shaped box on the left represents a task that has been orchestrated, while a small rectangular box on the right represents a remaining task that has not been orchestrated. Tasks ① and ② have been orchestrated, and a task ③ has not been orchestrated. Values of numbers 1, 2, and 3 indicate priorities of the three tasks, and a smaller number indicates a higher priority. To be specific, an order of priorities from high to low is ①>②>③. Starting from a second large rectangular box, the process is as follows: Because the task ③ cannot be orchestrated, the task ② is returned, and then the task ③ with the priority lower than that of the task ② is orchestrated. Subsequently, a normal orchestration process is entered. To be specific, the remaining unorchestrated tasks are orchestrated based on the priority sequence. In this case, the task ② is left. If the task ② cannot be orchestrated, the task ③ is returned. Because there is no task with a priority lower than that of the task ③ among the remaining unorchestrated tasks, the task ① is returned. In this case, because there are tasks ② and ③ with priorities lower than that of the task ①, the task ② with a higher priority is selected from the two for orchestration. Subsequently, the normal orchestration process is entered. To be specific, the remaining unorchestrated tasks are orchestrated based on the priority sequence. The task ① is orchestrated, and if the remaining task (3) cannot be orchestrated, the task ① is returned. The task (3) is orchestrated, and if the remaining task ① cannot be orchestrated, the task ③ is returned. If there is no task with a priority lower than that of the task ③ among the remaining unorchestrated tasks, the task ② is returned. The others may be deduced by analogy, until orchestration is completed, and an order of the three tasks is ③-②-①. Certainly, this is merely to illustrate an exemplary worst case of backtracking for a backtracking process, and is not a limitation to this disclosure.

It should be noted that for tasks that need to be completed by different processors, regarding the tasks of each processor, the task scheduling table for each type of tasks can be determined according to the method in this disclosure based on another type of processor resources, so that the corresponding type of processor can perform task scheduling based on the task scheduling table. A specific principle is not described in detail.

The foregoing embodiments or optional examples disclosed in this disclosure can be implemented separately or in any combination without conflict. This can be specifically set according to actual requirements, and is not limited in this disclosure.

Any task scheduling processing method provided in the embodiments of this disclosure can be implemented by any suitable device with a data processing capability, including but not limited to a terminal device and a server. Alternatively, any task scheduling processing method provided in the embodiments of this disclosure can be implemented by a processor. For example, the processor implements any task scheduling processing method described in the embodiments of this disclosure by invoking corresponding instructions stored in a memory. Details are not described below again.

### Exemplary apparatus

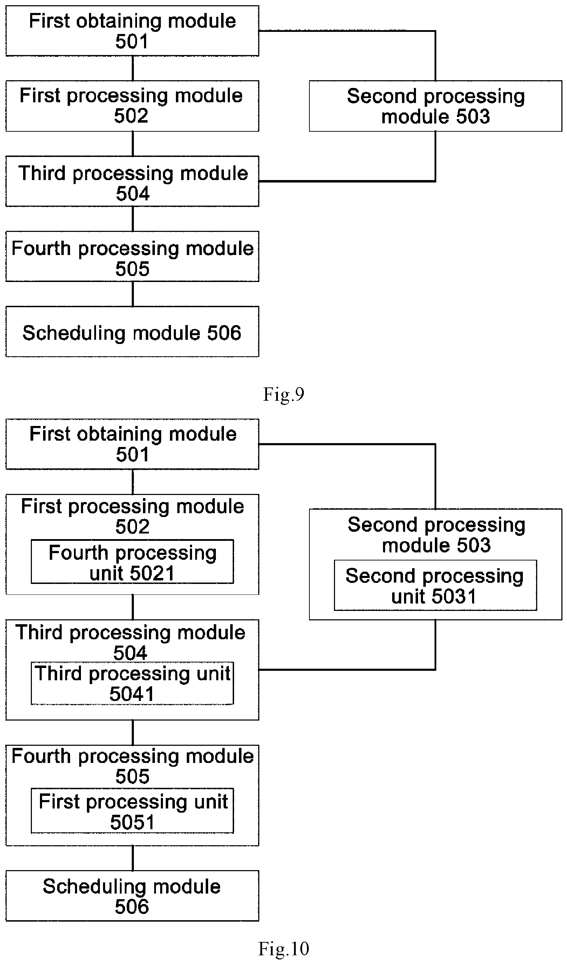

FIG. 9 is a schematic structural diagram of a task scheduling processing apparatus according to an exemplary embodiment of this disclosure. The apparatus in this embodiment can be configured to implement the corresponding method embodiments of this disclosure. The apparatus shown in FIG. 9 includes a first obtaining module 501, a first processing module 502, a second processing module 503, a third processing module 504, a fourth processing module 505, and a scheduling module 506.

The first obtaining module 501 is configured to obtain to-be-orchestrated task information and target resource information, where the to-be-orchestrated task information includes periodic task description information corresponding to at least one to-be-orchestrated task, and the target resource information includes available processing resource information. The first processing module 502 is configured to determine a first quantity of threads based on the target resource information. The second processing module 503 is configured to determine an orchestration period based on the to-be-orchestrated task information. The third processing module 504 is configured to determine, based on the orchestration period, time slices respectively corresponding to the first quantity of threads. The fourth processing module 505 is configured to generate a task scheduling table based on the to-be-orchestrated task information and the time slices respectively corresponding to all the threads, where the task scheduling table includes threads respectively corresponding to all to-be-orchestrated tasks and corresponding execution time information in the time slice for the thread. The scheduling module 506 is configured to schedule all the to-be-orchestrated tasks based on the task scheduling table.

FIG. 10 is a schematic structural diagram of a task scheduling processing apparatus according to another exemplary embodiment of this disclosure.

In an optional example, the fourth processing module 505 includes a first processing unit 5051 which is configured to determine, based on the to-be-orchestrated task information and the time slices respectively corresponding to all the threads, the threads respectively corresponding to all the to-be-orchestrated tasks and the corresponding execution time information in the time slice for the thread by using a backtracking algorithm, to generate the task scheduling table.

In an optional example, the periodic task description information includes a task period and an execution time threshold of the to-be-orchestrated task, and the first processing unit 5051 is specifically configured to:
determine a priority sequence of all the to-be-orchestrated tasks based on task periods and execution time thresholds respectively corresponding to all the to-be-orchestrated tasks and a first rule; for any idle time point in the time slice corresponding to any thread, determine, based on the priority sequence, a first to-be-orchestrated task that takes the idle time point as a starting time point, where the first to-be-orchestrated task is one of currently unorchestrated to-be-orchestrated tasks in the priority sequence, and the idle time point is a time point that is not currently occupied by an orchestrated to-be-orchestrated task; determine the corresponding execution time information that is of the first to-be-orchestrated task and that is in the time slice for the thread based on the starting time point of the first to-be-orchestrated task and the task period and the execution time threshold corresponding to the first to-be-orchestrated task; in response to that remaining unorchestrated to-be-orchestrated tasks cannot be orchestrated, return a second to-be-orchestrated task that is orchestrated for a last time to the unorchestrated to-be-orchestrated tasks; determine, based on the priority sequence, a third to-be-orchestrated task with a priority lower than that of the second to-be-orchestrated task from the remaining unorchestrated to-be-orchestrated tasks; orchestrate the third to-be-orchestrated task based on an idle time point after the second to-be-orchestrated task is returned, to determine the thread corresponding to the third to-be-orchestrated task and the corresponding execution time information in the time slice for the thread; and perform the step of for any idle time point in the time slice corresponding to any thread, determining, based on the priority sequence, the first to-be-orchestrated task that takes the idle time point as the starting time point, until all the to-be-orchestrated tasks are orchestrated, to obtain the task scheduling table.

In an optional example, the first processing unit 5051 is specifically configured to:
determine priorities respectively corresponding to all the to-be-orchestrated tasks in an ascending order based on the task periods respectively corresponding to all the to-be-orchestrated tasks, where the priority of the to-be-orchestrated task with a smaller task period is higher than that of the to-be-orchestrated task with a larger task period; for at least two to-be-orchestrated tasks with a same task period, determine the priorities respectively corresponding to the at least two to-be-orchestrated tasks based on the execution time thresholds of the at least two to-be-orchestrated tasks in a descending order, where the priority of the to-be-orchestrated task with a larger execution time threshold is higher than that of the to-be-orchestrated task with a smaller execution time threshold; and determine the priority sequence based on the priorities respectively corresponding to all the to-be-orchestrated tasks.

In an optional example, after in response to that the remaining unorchestrated to-be-orchestrated tasks cannot be orchestrated, returning the second to-be-orchestrated task that is orchestrated for the last time to the unorchestrated to-be-orchestrated tasks, the first processing unit 5051 is further configured to:
in response to that there is no third to-be-orchestrated task with a priority lower than that of the second to-be-orchestrated task in the remaining unorchestrated to-be-orchestrated tasks, or all to-be-orchestrated tasks with priorities lower than that of the second to-be-orchestrated task in the remaining unorchestrated to-be-orchestrated tasks cannot be orchestrated, return a fourth to-be-orchestrated task that is orchestrated prior to the second to-be-orchestrated task to the unorchestrated to-be-orchestrated tasks; determine a fifth to-be-orchestrated task with a priority lower than that of the fourth to-be-orchestrated task from the remaining unorchestrated to-be-orchestrated tasks; orchestrate the fifth to-be-orchestrated task based on an idle time point after the fourth to-be-orchestrated task is returned, to determine the thread corresponding to the fifth to-be-orchestrated task and the corresponding execution time information in the time slice for the thread; and perform the step of for any idle time point in the time slice corresponding to any thread, determining, based on the priority sequence, the first to-be-orchestrated task that takes the idle time point as the starting time point, until all the to-be-orchestrated tasks are orchestrated, to obtain the task scheduling table.

In an optional example, the second processing module 503 includes: a second processing unit 5031, configured to take a preset multiple of a least common multiple for the task periods respectively corresponding to all the to-be-orchestrated tasks as the orchestration period.

In an optional example, the third processing module 504 includes: a third processing unit 5041, configured to for each thread, determine that the time slice corresponding to the thread is same to the orchestration period.

In an optional example, the target resource information includes a first quantity of available processing resource information, and the first processing module 502 includes: a fourth processing unit 5021, configured to determine the first quantity of threads based on the first quantity of processing resource information, where processing resources are in one-to-one correspondence to the threads.

In this disclosure, each module and unit in the apparatus can also be divided into finer granularity according to actual requirements. This can be set according to actual requirements.

For a specific operating principle of each part of the apparatus in this disclosure, reference can be made to the corresponding method embodiments described above. Details are not described herein again.

### Exemplary electronic device

An embodiment of this disclosure further provides an electronic device, including: a memory, configured to store a computer program; and a processor, configured to execute the computer program stored in the memory, where when the computer program is executed, the task scheduling processing method according to any one of the foregoing embodiments of this disclosure is implemented.

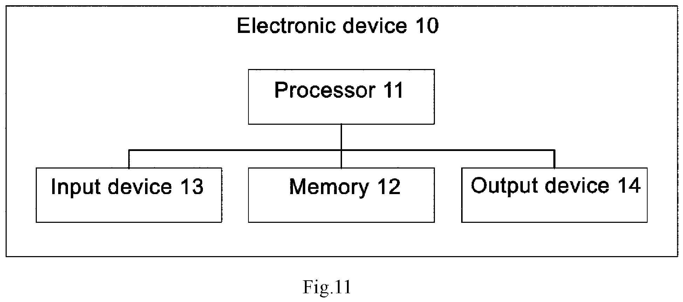

FIG. 11 is a schematic structural diagram of an application embodiment of an electronic device according to this disclosure. In this embodiment, an electronic device 10 includes one or more processors 11 and a memory 12.

The processor 11 may be a central processing unit (CPU) or another form of processing unit having a data processing capability and/or an instruction execution capability, and can control other components in the electronic device 10 to perform a desired function.

The memory 12 can include one or more computer program products. The computer program product can include various forms of computer readable storage media, such as a volatile memory and/or a non-volatile memory. The volatile memory can include, for example, a random access memory (RAM) and/or a cache. The nonvolatile memory can include, for example, a read-only memory (ROM), a hard disk, and a flash memory. One or more computer program instructions can be stored on the computer readable storage medium. The processor 11 can execute the program instruction to implement the method according to various embodiments of this disclosure that are described above and/or other desired functions.

In an example, the electronic device 10 can further include an input device 13 and an output device 14. These components are connected with each other through a bus system and/or another form of connection mechanism (not shown).

In addition, the input device 13 can further include, for example, a keyboard and a mouse.

The output device 14 can output various information to the outside. The output device 14 can include, for example, a display, a loudspeaker, a printer, a communication network, and a remote output device connected by the communication network.

Certainly, for simplicity, FIG. 11 shows only some of components in the electronic device 10 that are related to this disclosure, and components such as a bus and an input/output interface are omitted. In addition, according to specific application situations, the electronic device 10 can further include any other appropriate components.

### Exemplary computer program product and computer readable storage medium

In addition to the foregoing method and device, the embodiments of this disclosure can also relate to a computer program product, which includes computer program instructions. When the computer program instructions are run by a processor, the processor is enabled to perform the steps, of the method according to the embodiments of this disclosure, that are described in the "exemplary method" part of this specification.

The computer program product may be program codes, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code can be entirely or partially executed on a user computing device, executed as an independent software package, partially executed on the user computing device and partially executed on a remote computing device, or entirely executed on the remote computing device or a server.

In addition, the embodiments of this disclosure can further relate to a computer readable storage medium, which stores computer program instructions. When the computer program instructions are run by the processor, the processor is enabled to perform the steps, of the method according to the embodiments of this disclosure, that are described in the "exemplary method" part of this specification.

The computer readable storage medium may be one readable medium or any combination of a plurality of readable media. The readable medium may be a readable signal medium or a readable storage medium. The readable storage medium can include, for example, but is not limited to electricity, magnetism, light, electromagnetism, infrared ray, or semiconductor systems, apparatuses, or devices, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, it should be pointed out that the advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

The various embodiments in this specification are all described in a progressive way, and each embodiment focuses on a difference from other embodiments. For same or similar parts among the various embodiments, reference can be made to each other. The system embodiments basically correspond to the method embodiments, and thus are relatively simply described. For related parts, reference can be made to a part of the descriptions of the method embodiments.

The foregoing descriptions are given for illustration and description. In addition, the description is not intended to limit the embodiments of this disclosure to forms disclosed herein. Although a plurality of exemplary aspects and embodiments have been discussed above, a person skilled in the art may recognize certain variations, modifications, changes, additions, and sub-combinations thereof.

## Claims

1. A task scheduling processing method, **characterized in that** the task scheduling processing method comprises:
obtaining (step 201) to-be-orchestrated task information and target resource information, wherein the to-be-orchestrated task information comprises periodic task description information corresponding to at least one to-be-orchestrated task, and the target resource information comprises available processing resource information;
determining (step 202) a first quantity of threads based on the target resource information;
determining (step 203) an orchestration period based on the to-be-orchestrated task information;
determining (step 204), based on the orchestration period, time slices respectively corresponding to the first quantity of threads;
generating (step 205) a task scheduling table based on the to-be-orchestrated task information and the time slices respectively corresponding to all the threads, wherein the task scheduling table comprises threads respectively corresponding to all to-be-orchestrated tasks and corresponding execution time information in the time slice for the thread; and
scheduling (step 206) all the to-be-orchestrated tasks based on the task scheduling table.

2. The method according to claim 1, wherein the generating (step 205) a task scheduling table based on the to-be-orchestrated task information and the time slices respectively corresponding to all the threads comprises:
determining (step 2051), based on the to-be-orchestrated task information and the time slices respectively corresponding to all the threads, the threads respectively corresponding to all the to-be-orchestrated tasks and the corresponding execution time information in the time slice for the thread by using a backtracking algorithm, to generate the task scheduling table.

3. The method according to claim 2, wherein the periodic task description information comprises a task period and an execution time threshold of the to-be-orchestrated task; and
the determining (step 2051), based on the to-be-orchestrated task information and the time slices respectively corresponding to all the threads, the threads respectively corresponding to all the to-be-orchestrated tasks and the corresponding execution time information in the time slice for the thread by using a backtracking algorithm, to generate the task scheduling table comprises:
determining (step 20511) a priority sequence of all the to-be-orchestrated tasks based on task periods and execution time thresholds respectively corresponding to all the to-be-orchestrated tasks and a first rule;
for any idle time point in the time slice corresponding to any thread, determining (step 20512), based on the priority sequence, a first to-be-orchestrated task that takes the idle time point as a starting time point, wherein the first to-be-orchestrated task is one of currently unorchestrated to-be-orchestrated tasks in the priority sequence, and the idle time point is a time point that is not currently occupied by an orchestrated to-be-orchestrated task;
determining (step 20513) the corresponding execution time information that is of the first to-be-orchestrated task and that is in the time slice for the thread based on the starting time point of the first to-be-orchestrated task and the task period and the execution time threshold corresponding to the first to-be-orchestrated task;
in response to that remaining unorchestrated to-be-orchestrated tasks cannot be orchestrated, returning (step 20514) a second to-be-orchestrated task that is orchestrated for a last time to the unorchestrated to-be-orchestrated tasks;
determining (step 20515), based on the priority sequence, a third to-be-orchestrated task with a priority lower than that of the second to-be-orchestrated task from the remaining unorchestrated to-be-orchestrated tasks;
orchestrating (step 20516) the third to-be-orchestrated task based on an idle time point after the second to-be-orchestrated task is returned, to determine the thread corresponding to the third to-be-orchestrated task and the corresponding execution time information in the time slice for the thread; and
performing (step 20517) the step of for any idle time point in the time slice corresponding to any thread, determining, based on the priority sequence, a first to-be-orchestrated task that takes the idle time point as a starting time point, until all the to-be-orchestrated tasks are orchestrated, to obtain the task scheduling table.

4. The method according to claim 3, wherein the determining (step 20511) a priority sequence of all the to-be-orchestrated tasks based on task periods and execution time thresholds respectively corresponding to all the to-be-orchestrated tasks and a first rule comprises:
determining (a) priorities respectively corresponding to all the to-be-orchestrated tasks in an ascending order based on the task periods respectively corresponding to all the to-be-orchestrated tasks, wherein the priority of the to-be-orchestrated task with a smaller task period is higher than that of the to-be-orchestrated task with a larger task period;
for at least two to-be-orchestrated tasks with a same task period, determining (b) the priorities respectively corresponding to the at least two to-be-orchestrated tasks based on the execution time thresholds of the at least two to-be-orchestrated tasks in a descending order, wherein the priority of the to-be-orchestrated task with a larger execution time threshold is higher than that of the to-be-orchestrated task with a smaller execution time threshold; and
determining (c) the priority sequence based on the priorities respectively corresponding to all the to-be-orchestrated tasks.

5. The method according to claim 3, wherein after the in response to that remaining unorchestrated to-be-orchestrated tasks cannot be orchestrated, returning (step 20514) a second to-be-orchestrated task that is orchestrated for a last time to the unorchestrated to-be-orchestrated tasks, the method further comprises:
in response to that there is no third to-be-orchestrated task with a priority lower than that of the second to-be-orchestrated task in the remaining unorchestrated to-be-orchestrated tasks, or all to-be-orchestrated tasks with priorities lower than that of the second to-be-orchestrated task in the remaining unorchestrated to-be-orchestrated tasks cannot be orchestrated, returning (step 301) a fourth to-be-orchestrated task that is orchestrated prior to the second to-be-orchestrated task to the unorchestrated to-be-orchestrated tasks;
determining (step 302), based on the priority sequence, a fifth to-be-orchestrated task with a priority lower than that of the fourth to-be-orchestrated task from the remaining unorchestrated to-be-orchestrated tasks;
orchestrating (step 303) the fifth to-be-orchestrated task based on an idle time point after the fourth to-be-orchestrated task is returned, to determine the thread corresponding to the fifth to-be-orchestrated task and the corresponding execution time information in the time slice for the thread; and
performing (step 304) the step of for any idle time point in the time slice corresponding to any thread, determining, based on the priority sequence, a first to-be-orchestrated task that takes the idle time point as a starting time point, until all the to-be-orchestrated tasks are orchestrated, to obtain the task scheduling table.

6. The method according to any one of the preceding claims, wherein the determining (step 203) an orchestration period based on the to-be-orchestrated task information comprises:
taking (step 2031) a preset multiple of a least common multiple for the task periods respectively corresponding to all the to-be-orchestrated tasks as the orchestration period.

7. The method according to any one of the preceding claims, wherein the determining (step 204), based on the orchestration period, time slices respectively corresponding to the first quantity of threads comprises:
for each thread, determining (step 2041) that the time slice corresponding to the thread has the same duration as the orchestration period.

8. The method according to any one of the preceding claims, wherein the target resource information comprises a first quantity of available processing resource information; and
the determining (step 202) a first quantity of threads based on the target resource information comprises:
determining (step 2021) the first quantity of threads based on the first quantity of processing resource information, wherein the processing resource information is in one-to-one correspondence to the threads.

9. A task scheduling processing apparatus, **characterized in** comprising:
a first obtaining module (501), configured to obtain to-be-orchestrated task information and target resource information, wherein the to-be-orchestrated task information comprises periodic task description information corresponding to at least one to-be-orchestrated task, and the target resource information comprises available processing resource information;
a first processing module (502), configured to determine a first quantity of threads based on the target resource information;
a second processing module (503), configured to determine an orchestration period based on the to-be-orchestrated task information;
a third processing module (504), configured to determine, based on the orchestration period, time slices respectively corresponding to the first quantity of threads;
a fourth processing module (505), configured to generate a task scheduling table based on the to-be-orchestrated task information and the time slices respectively corresponding to all the threads, wherein the task scheduling table comprises threads respectively corresponding to all to-be-orchestrated tasks and corresponding execution time information in the time slice for the thread; and
a scheduling module (506), configured to schedule all the to-be-orchestrated tasks based on the task scheduling table.

10. The task scheduling processing apparatus according to claim 9, wherein the fourth processing module (505) includes a first processing unit (5051) which is configured to determine, based on the to-be-orchestrated task information and the time slices respectively corresponding to all the threads, the threads respectively corresponding to all the to-be-orchestrated tasks and the corresponding execution time information in the time slice for the thread by using a backtracking algorithm, to generate the task scheduling table.

11. The task scheduling processing apparatus according to claim 10, wherein the periodic task description information includes a task period and an execution time threshold of the to-be-orchestrated task, and the first processing unit (5051) is specifically configured to:
determine a priority sequence of all the to-be-orchestrated tasks based on task periods and execution time thresholds respectively corresponding to all the to-be-orchestrated tasks and a first rule;
for any idle time point in the time slice corresponding to any thread, determine, based on the priority sequence, a first to-be-orchestrated task that takes the idle time point as a starting time point, wherein the first to-be-orchestrated task is one of currently unorchestrated to-be-orchestrated tasks in the priority sequence, and the idle time point is a time point that is not currently occupied by an orchestrated to-be-orchestrated task;
determine the corresponding execution time information that is of the first to-be-orchestrated task and that is in the time slice for the thread based on the starting time point of the first to-be-orchestrated task and the task period and the execution time threshold corresponding to the first to-be-orchestrated task;
in response to that remaining unorchestrated to-be-orchestrated tasks cannot be orchestrated, return a second to-be-orchestrated task that is orchestrated for a last time to the unorchestrated to-be-orchestrated tasks;
determine, based on the priority sequence, a third to-be-orchestrated task with a priority lower than that of the second to-be-orchestrated task from the remaining unorchestrated to-be-orchestrated tasks;
orchestrate the third to-be-orchestrated task based on an idle time point after the second to-be-orchestrated task is returned, to determine the thread corresponding to the third to-be-orchestrated task and the corresponding execution time information in the time slice for the thread; and
perform the step of for any idle time point in the time slice corresponding to any thread, determining, based on the priority sequence, the first to-be-orchestrated task that takes the idle time point as the starting time point, until all the to-be-orchestrated tasks are orchestrated, to obtain the task scheduling table.

12. The task scheduling processing apparatus according to claim 9, wherein the second processing module (503) includes: a second processing unit (5031), configured to take a preset multiple of a least common multiple for the task periods respectively corresponding to all the to-be-orchestrated tasks as the orchestration period.

13. The task scheduling processing apparatus according to claim 9, wherein the third processing module (504) includes: a third processing unit (5041), configured to for each thread, determine that the time slice corresponding to the thread is same to the orchestration period.

14. A non-transitory computer readable storage medium, **characterized in that** the storage medium stores a computer program, and the computer program is used for implementing the task scheduling processing method according to any one of claims 1 to 8.

15. An electronic device, **characterized in that** the electronic device comprises:
a processor; and
a memory, configured to store processor-executable instructions,
wherein the processor is configured to read the executable instructions from the memory, and execute the instructions to implement the task scheduling processing method according to any one of claims 1 to 8.
